Europäisches Patentamt

**European Patent Office**

**Office européen des brevets**

(11) Numéro de publication: **0 301 923 B1**

# (12) FASCICULE DE BREVET EUROPEEN

(45) Date de publication de fascicule du brevet: **12.08.92**   (51) Int. Cl.⁵: **G01S 7/28**, H02M 3/28

(21) Numéro de dépôt: **88400168.6**

(22) Date de dépôt: **26.01.88**

---

(54) **Dispositif d'alimentation électrique, en particulier pour un générateur d'ondes pour un radar à impulsions.**

---

(30) Priorité: **31.07.87 FR 8710922**

(43) Date de publication de la demande:
**01.02.89 Bulletin 89/05**

(45) Mention de la délivrance du brevet:
**12.08.92 Bulletin 92/33**

(84) Etats contractants désignés:
**BE DE ES GB IT NL**

(56) Documents cités:
**WO-A-87/05165**
**FR-A- 2 590 745**

(73) Titulaire: **ELECTRONIOUE SERGE DASSAULT**
**55, quai Marcel Dassault**
**F-92214 Saint-Cloud(FR)**

(72) Inventeur: **Domenget, Jean-Pierre**
**62, rue du Colonel Rochebrune**
**F-92380 Garches(FR)**
Inventeur: **Lorec, Gérard**
**15, avenue du Lycée Lakanal**
**F-92340 Bourg La Reine(FR)**

(74) Mandataire: **Plaçais, Jean-Yves et al**
**Cabinet Netter, 40, rue Vignon**
**F-75009 Paris(FR)**

## Description

L'invention concerne un dispositif d'alimentation électrique, et plus particulièrement ceux qui doivent fonctionner à fréquence élevée.

Elle trouve une application dans la réalisation d'une alimentation stabilisée de radar et notamment de générateur hyperfréquence ou tube à ondes progressives dans des radars à impulsions. Elle vise plus précisément les radars installés à bord de véhicules, tels que des avions ou autres engins aérospatiaux dans lesquels les considérations d'encombrement et de poids sont essentielles et qui sont destinés à fonctionner dans des conditions d'environnement difficiles.

Dans la publication FR-A 2,590,745 du 29.05.87, la Demanderesse a proposé un dispositif d'alimentation d'un générateur d'ondes pour un radar à impulsions comprenant un enroulement primaire connecté en série avec un commutateur électronique de puissance commandé à la fréquence de récurrence des impulsions produites par le radar ou à une fréquence multiple de cette dernière, aux bornes d'une source de tension d'alimentation redressée et filtrée. Le primaire est enroulé autour d'un élément magnétique sur lequel sont bobinés une pluralité d'enroulements secondaires connectés chacun en série à une diode et à une capacité de filtrage. Ces capacités sont elles-mêmes mises en série.

Plusieurs transformateurs de ce type peuvent être empilés en série avec des condensateurs branchés en parallèle au circuit série formé par chaque enroulement primaire afin de cumuler les tensions secondaires de chaque transformateur aux bornes de sortie THT de l'alimentation.

Malheureusement, la mise en série de tels transformateurs afin d'alimenter des électrodes de tubes à hyperfréquence consommant des puissances différentes, exigerait une puissance ramenée au primaire de chaque transformateur différente d'un transformateur à un autre, ce qui conduirait à un déséquilibrage des charges ramenées au primaire desdits transformateurs qui empêcherait le bon fonctionnement du dispositif.

L'invention a pour but d'apporter une solution à ce problème. A cette fin, elle propose un dispositif permettant d'alimenter en très haute tension plusieurs électrodes de tubes à hyperfréquence consommant des puissances différentes sans introduire de déséquilibrage au niveau des charges ramenées au primaire du dispositif.

L'invention porte sur un dispositif d'alimentation électrique, en particulier pour un générateur d'ondes pour un radar à impulsions, du type comprenant un dispositif de régulation à découpage et un transformateur alimenté à une source basse tension.

Le transformateur est du type comme selon FR-A 2,590,745, comprenant ;
- une paire de bornes d'entrée propre à être connectée à la source basse tension à courant continu,
- une entrée de commande pour recevoir un signal de régulation de tension à la fréquence de répétition des impulsions du radar ou à un multiple de cette dernière,
- une pluralité de bornes haute tension de haute puissance à courant continu pour connecter les électrodes respectives du générateur d'ondes (14),
- un circuit magnétique,
- une pluralité d'enroulements primaires principaux, bobinés sur ledit circuit magnétique, et montés en série avec une pluralité correspondante de commutateurs électriques de puissance principaux ayant leurs grilles de commande respectives connectées à l'entrée de commande, et chaque enroulement primaire principal étant connecté à travers un condensateur respectif, lesdits condensateurs étant connectés en série à travers la paire de bornes d'entrée de courant continu.
- une pluralité d'enroulements secondaires bobinés sur le circuit magnétique, chaque enroulement secondaire étant monté à travers un premier redresseur respectif monté en série avec un condensateur et connecté pour être conducteur quand les commutateurs électriques de puissance sont bloqués, les condensateurs étant connectés en série et définissant la pluralité de bornes haute tension de haute puissance à courant continu.

Selon une définition générale de l'invention, il est associé à chaque enroulement primaire principal une pluralité d'enroulements primaires additionnels mis en parallèle par rapport à l'enroulement primaire principal, bobinés sur ledit circuit magnétique, et montés en série avec une pluralité correspondante de commutateurs électriques de puissance additionnels ayant leurs grilles de commande respectives connectées à l'entrée de commande.

L'alimentation stabilisée ainsi réalisée selon l'invention comporte un transformateur se décomposant en une pluralité de primaires et de secondaires enroulés autour du même circuit magnétique. Les charges ramenées aux primaires du transformateur sont identiques dans l'éventualité d'une alimentation des électrodes du tube à hyperfréquence consommant des puissances différentes, ce qui équilibre les puissances transitées par les commutateurs de puissance reliant les enroulements primaires à la source basse tension.

Selon une autre caractéristique de l'invention, les commutateurs électriques sont commandés en phase.

Avantageusement, les commutateurs électroniques de puissance sont des transistors à effet de champ du type VMOS.

D'autres caractéristiques et avantages de l'invention apparaîtront à l'examen de la description détaillée ci-après, et des dessins annexés sur lesquels :

- la figure 1 illustre de façon schématique les éléments constitutifs et essentiels du dispositif selon l'invention;
- les figures 2a et 2b sont des diagrammes de signaux de courant respectivement primaire et secondaire; et
- la figure 3 est un diagramme illustrant les tensions primaires et secondaires du dispositif de la figure 1.

Les dessins annexés comportent à de nombreux titres des éléments de caractère certain. Ils pourront donc non seulement servir à éclairer la description ci-après, mais aussi contribuer à la définition de l'invention, le cas échéant.

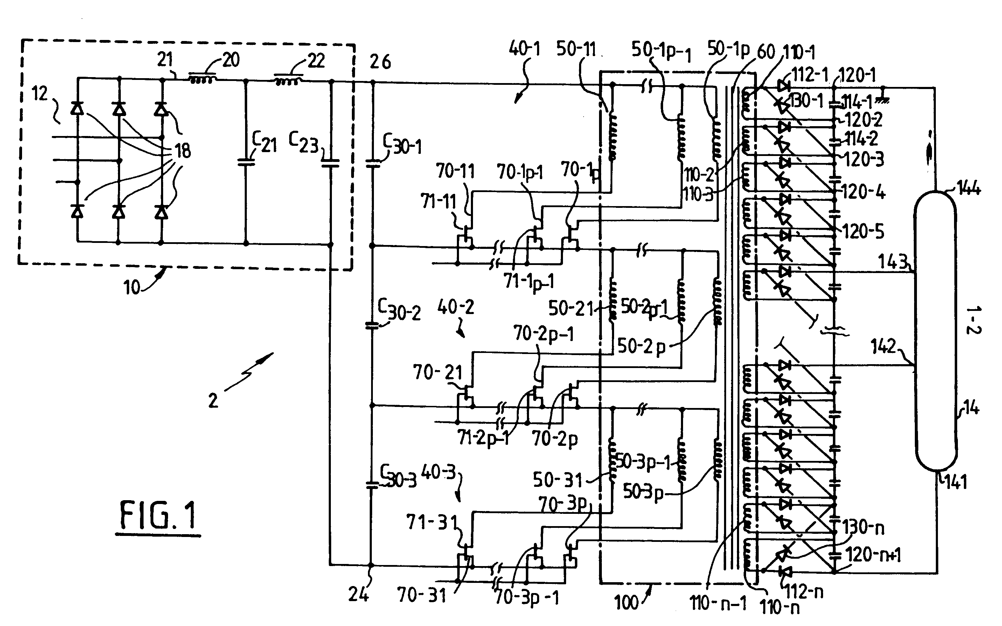

Sur la figure 1, la référence 2 désigne le dispositif d'alimentation électrique selon l'invention. Le dispositif 2 comprend une alimentation 10 conventionnelle raccordée à une source de tension (E) 12 pour l'alimentation d'un tube à ondes progressives 14 pour radar. Les signaux de la source 12 sont dérivés d'un réseau triphasé à bord d'un avion, convenablement redressé par un jeu de diodes tel que 18 pour fournir aux deux bornes d'entrée 20 et 21 de l'alimentation 10, une tensicn redressée. Celle-ci est filtrée par un circuit de self L20 et un condensateur C21 puis par un circuit de self L22 et un condensateur C23. Dans un équipement embarqué, la fréquence de la source 12 peut être par exemple 400 Hz et la tension redressée entre les bornes 20 et 21 peut avoir une valeur nominale d'environ 270 Volts, mais être sujette à des fluctuations entre 130 et 420 Volts moyens.

Les circuits inductance L20-capacité C21 et inductance L22-capacité C23 font apparaître une tension continue entre les bornes 24 et 26. Cette tension continue peut être élaborée par une source de tension continue conventionnelle.

Aux bornes de chacun des condensateurs C30-1, C30-2, C30-3 est branché un étage primaire 40 individualisé respectivement en 40-1, 40-2, 40-3. Bien entendu, le nombre d'étages peut être différent de 3. Chaque étage primaire 40 comprend p enroulements primaires 50 de transformateur bobinés chacun sur un même circuit magnétique 60. p est par exemple égal à 12.

Chaque enroulement primaire 50 est relié à la source de basse tension par un commutateur électrique de puissance 70 commandé par un signal de régulation de tension à la fréquence de répétition des impulsions du radar, ou à un multiple de cette dernière. Les commutateurs 70 sont constitués par exemple par un transistor de puissance à effet de champ du type VMOS. On peut utiliser, par exemple, à cet effet un transistor de la catégorie IRF 450 fabriqué par la Société International Rectifier, Etats-Unis. Un tel composant est capable de commuter, à des fréquences pouvant atteindre 200 à 300 kHz sous la commande de sa tension de grille 71, des courants pouvant atteindre 10 ampères. Sa tension de blocage peut atteindre 500 Volts.

Les grilles de commande 71 des commutateurs électriques de puissance 70 relatifs à un étage 40 sont reliées les unes aux autres et sont commandées par un même signal de régulation de période T que l'on décrira ci-après. Les commutateurs électriques 70 sont tous commandés en phase.

Aux 3 x p enroulements primaires 50 du transformateur haute tension 100 s'ajoutent n circuits secondaires comprenant chacun un enroulement secondaire 110, individualisé en 110-1 à 110-n, bobiné sur le même circuit magnétique 60. n est par exemple égal à 40. Chaque enroulement secondaire tel que 110-1 est connecté à une diode de redressement 112-1 dans un sens tel que, lorsque le commutateur 70-11 est passant, la tension induite dans l'enroulement 110-1 prenne la diode 112-1 en sens inverse. Un condensateur 114-1 est connecté, en parallèle au circuit formé par l'enroulement 110-1 et la diode 112-1, entre deux bornes 120-1 et 120-2 qui forment les bornes de sortie du circuit secondaire ainsi constitué. Les circuits secondaires 1 à n sont connectés en série, de telle sorte qu'il apparaît, entre les bornes 120-1 et 120-n + 1, une tension résultante qui est la somme des tensions continues individuelles aux sorties de chacun de ces circuits secondaires. Des diodes 130 individualisées en 130-1 à 130-n relient l'une des armatures des capacités 114 à la cathode des diodes 112. Par exemple, l'armature de la capacité 114-2 est reliée à la cathode de la diode 112-1 via la diode 130-1. La diode 130-1 relie ainsi le circuit secondaire 110-1 au circuit secondaire 110-2. Ces diodes sont destinées à protéger les diodes 112 contre des surtensions parasites apparaissant au moment de leur reblocage.

Entre les bornes 120-1 et 120-n + 1 est monté le tube à ondes progressives 14 qui comporte une cathode 141 reliée à la borne 120-n + 1, un premier collecteur 142 relié à l'une des bornes de sortie 120, un second collecteur 143 relié à l'une des sorties 120 et une hélice 144 reliée à la borne de sortie 120-1.

Les diodes 112 et 130 sont des éléments à temps de recouvrement très faible permettant un fonctionnement à la même fréquence que les commutateurs VMOS 70, ces diodes étant capables de supporter des tensions inverses élevées.

Le dispositif 2 ainsi réalisé est un module à extra-rupture qui peut fonctionner en régime discontinu ou en régime continu selon les valeurs relatives des selfs-inductance des primaires 50, de la période de commutation T de la grille de commande 71 et de la puissance de sortie. Dans la réalisation ici décrite, on préfère un fonctionnement en mode dit continu, c'est-à-dire dans lequel le courant à l'intérieur de chaque phase de fonctionnement des circuits primaires et secondaires ne s'annule pas.

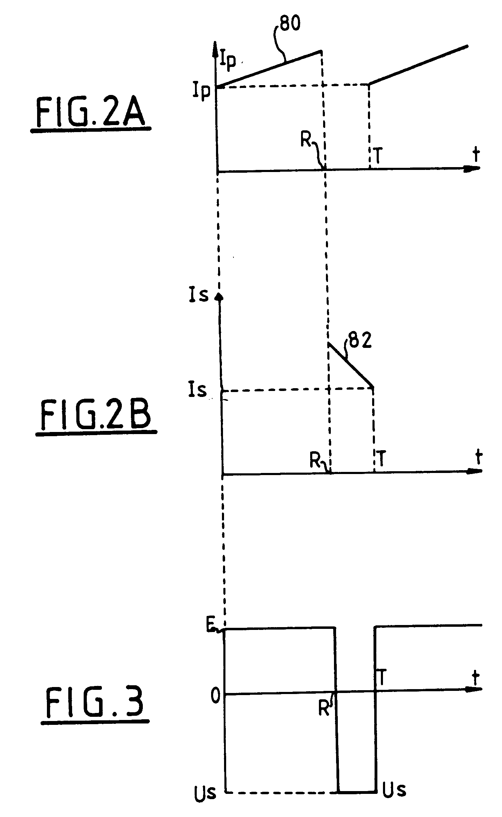

On se réfère maintenant aux figures 2 et 3 qui illustrent le fonctionnement du dispositif selon l'invention. En fonctionnement, lorsque chaque commutateur 70 est passant pendant un temps R, inférieur à la période de commutation T et régulé en fonction de la tension de sortie à obtenir, un courant Ip croissant circule dans chaque enroulement 50. Il charge l'inductance primaire de chaque enroulement 50. Pendant ce temps, aucun courant ne circule dans chacun des enroulements secondaires 110 en raison du sens de montage choisi pour les diodes 112. Lorsque le signal de commande appliqué sur chaque grille 71 coupe chaque commutateur 70, le courant Ip cesse. Un courant Is décroissant circule dans chacun des enroulements secondaires 110 à partir de l'instant R de cette commutation, dans le sens de conduction des diodes 112 respectives. Ce courant 82, qui correspond à la décharge de chaque inductance 50, est interrompu à l'instant T où chaque commutateur 70 est à nouveau rendu conducteur (fin de la période de commande du commutateur de découpage).

Si l'on considère la tension aux bornes de chaque enroulement primaire 50 et secondaire 112 (figure 3), on remarque que cette tension reste constante et égale à celle de la source de tension (E) 12 pendant la durée R pour les enroulements primaires 50, puis s'inverse lors de la coupure des commutateurs 70. Une tension Us apparaît alors entre les différentes bornes 120 de chaque circuit de sortie 110, ce signal de tension dure pendant toute la période s'écoulant de l'instant R à l'instant T. Si l'on prend soin de prévoir une durée R supérieure à la durée T-R, la tension Us, dans le cas d'un rapport de transformation unitaire, est supérieure à la tension E. La tension apparaissant entre les bornes de sortie 120-1 et 120-n+1 est égale à nxUs. Pour une tension Us de 700 Volts et un nombre n égal à 40, la tension de sortie du module 2 dans ces conditions est de l'ordre de 28 000 Volts.

Les avantages du dispositif électrique selon l'invention sont les suivants :
- possibilité de générer des tensions THT d'amplitude variable en ajustant le nombre n d'étages secondaires de tension Us mises en série;
- possibilité d'accroître la puissance de sortie de cette alimentation par l'adjonction de commutateurs de puissance sur les étages primaires horizontaux;
- possibilité d'adapter le dispositif d'alimentation électrique à des amplitudes différentes de la basse tension E par la modification du nombre d'étages primaires horizontaux montés en série entre les bornes d'entrée à basse tension;
- alimenter seul l'ensemble des électrodes d'un tube hyperfréquence à ondes progressives;
- alimenter seul simultanément plusieurs tubes à ondes progressives.

**Revendications**

1. Dispositif d'alimentation électrique pour un générateur d'ondes pour un radar à impulsions, ledit dispositif comprenant un dispositif de régulation à découpage et un transformateur alimenté par une source basse tension à courant continu, ledit transformateur comprenant :
   - une paire de bornes d'entrée (24 et 26) propre à être connectée à la source basse tension à courant continu,
   - une entrée de commande pour recevoir un signal de régulation de tension à la fréquence de répétition des impulsions du radar ou à un multiple de cette dernière,
   - une pluralité de bornes haute tension de haute puissance à courant continu (120-1 à 120-n+1) pour connecter les électrodes (141, 142, 143, 144) respectives du générateur d'ondes (14),
   - un circuit magnétique (60),
   - une pluralité d'enroulements primaires principaux (50-11, 50-21, 50-31), bobinés sur ledit circuit magnétique (60), et montés en série avec une pluralité correspondante de commutateurs électriques de puissance principaux (70-11 à 70-31) ayant leurs grilles de commande respectives (71-11 à 71-31) connectées à l'entrée de commande, chaque enroulement primaire principal étant connecté à travers un condensateur respectif (C30-1, C30-2 et C30-3), lesdits condensateurs (C30-1, C30-2 et C30-3) étant connectés en série à travers la paire de bornes d'entrée de courant continu (24 et 26), et
   - une pluralité d'enroulements secondaires (110-1 à 110-n) bobinés sur le circuit magnétique (60), chaque enroulement secondaire (110-1 à 110-n) étant monté à travers un premier redresseur respectif (112-1 à 112-n) mont en série avec un condensateur (114-1 à 114-n) et connecté pour être conducteur quand les commutateurs électriques de puissance (70) sont bloqués, les condensateurs (114-1 à 114-n) étant connectés en série et définissant la pluralité de bornes haute tension de haute puissance à courant continu (120-1 à 120-n + 1).

caractérisé en ce qu'en outre il est associé à chaque enroulement primaire principal (50-11) une pluralité d'enroulements primaires additionnels (50-1p-1 à 50-1p) mis en parallèle par rapport à l'enroulement primaire principal, bobinés sur ledit circuit magnétique (60), et montés en série avec une pluralité correspondante de commutateurs électriques de puissance additionnels (70-1p-1 à 70-1p) ayant leurs grilles de commande respectives (71-1p-1 à 71-1p) connectées à l'entrée de commande.

2. Dispositif selon la revendication 1, caractérisé en ce que chaque enroulement secondaire (110-1 à 110-n) comprend en outre un second redresseur respectif (130-1 à 130-n) connecté par l'une de ses électrodes au premier redresseur (112) correspondant et par l'autre de ses électrodes à l'armature opposée du condensateur (114) associé avec l'enroulement secondaire adjacent (110).

3. Dispositif selon la revendication 2, caractérisé en ce que les commutateurs électriques (70) sont commandés en phase.

4. Dispositif selon l'une des revendications I à 3, caractérisé en ce que les commutateurs électroniques de puissance (70) sont des transistors à effet de champ de type VMOS.

**Claims**

1. An electric power supply device for a wave generator of a pulse radar, the said device comprising a chopping regulator device and a transformer supplied by a low voltage direct current source, the said transformer including:
   - a pair of input terminals (24 and 26) capable of being connected to the direct current low voltage source,
   - a control input for receiving a voltage regulation signal at the repetition frequency of the radar pulses or at a multiple of the latter,
   - a plurality of direct current high power high voltage terminals (120-1 to 120-n + 1) for connecting the respective electrodes (141, 142, 143, 144) of the wave generator (14),
   - a magnetic circuit (60),
   - a plurality of main primary windings (50-11, 50-21, 50-31) wound on the said magnetic circuit (60), and mounted in series with a corresponding plurality of main electric power switches (70-11 to 70-31) having their respective control grids (71-11 to 71-31) connected to the control input, each main primary winding being connected via a respective capacitor (C30-1, C30-2 and C30-3), the said capacitors (C30-1, C30-2 and C30-3) being disposed in series via the pair of direct current input terminals (24 and 26), and
   - a plurality of secondary windings (110-1 to 110-n) wound on the magnetic circuit (60), each secondary winding (110-1 to 110-n) being mounted via a respective first rectifier (112-1 to 112-n) in series with a capacitor (114-1 to 114-n) and connected so as to be conductive when the electric power switches (70) are blocked, the capacitors (114-1 to 114-n) being connected in series and defining the plurality of direct current, high power high voltage terminals (120-1 to 120-n + 1),

   characterized in that there is associated, moreover, with each main primary winding (50-11) a plurality of additional primary windings (50-1p-1 to 50-1p), placed in parallel in relation to the main primary winding, wound on the said magnetic circuit (60), and mounted in series with a corresponding plurality of additional electric power switches (70-1p-1 to 70-1p) having their respective control grids (71-1p-1 to 71-1p) connected to the control input.

2. Device according to claim 1, characterized in that each secondary winding (110-1 to 110-n) includes, moreover, a respective second rectifier (130-1 to 130-n) connected via one of its electrodes to the corresponding first rectifier (112) and via the other of its electrodes to the opposed plate of the capacitor (114) associated with the adjacent secondary winding (110).

3. Device according to claim 2, characterized in that the electric power switches (70) are actuated in phase.

4. Device according to one of claims 1 to 3, characterized in that the electric power switches (70) are VMOS-type field effect transistors.

**Patentansprüche**

1. Elektrische Versorgungseinrichtung für einen Wellengenerator für Impulsradar, wobei die Vorrichtung eine Regelvorrichtung zum Abschneiden und einen Transformator aufweist, der von einer Niederspannungs-Gleichstromqelle versorgt wird, wobei der Transformator folgendes aufweist:

   - ein Paar von Eingangsklemmen (24 und 26), die an die Niederspannungs-Gleichstromquelle anschließbar sind,
   - einen Steuereingang zum Empfangen eines Spannungsregelsignals mit der Wiederholungsfrequenz des Impulsradars oder mit einem Vielfachen von letzterem,
   - eine Vielzahl von Hochspannungsklemmen hoher Leistung für Gleichstrom (120-1 bis 120-n + 1) zum Anschließen der jeweiligen Elektroden (141, 142, 143, 144) des Wellengenerators (14),
   - einen Magnetkreis (60),
   - eine Vielzahl von Hauptprimärwicklungen (50-11, 50-21, 50-31), die auf den Magnetkreis (60) gewickelt und in Reihe mit einer entsprechenden Vielzahl von elektrischen Hauptleistungswechselrichtern (70-11 bis 70-31) geschaltet sind, deren jeweilige Steuergates (71-11 bis 71-31) an den Steuereingang angeschlossen sind, wobei jede Hauptprimärwicklung parallel zu einem jeweiligen Kondensator (C30-1, C30-2 und C30-3) geschaltet ist, wobei die Kondensatoren (C30-1, C30-2 und C30-3) in Reihe parallel zu den Eingangsklemmen (24 und 26) für Gleichstrom geschaltet sind, und
   - eine Vielzahl von Sekundärwicklungen (110-1 bis 110-n), die auf den Magnetkreis (60) gewickelt sind, wobei jede Sekundärwicklung (110-1 bis 110-n) parallel zu einem jeweiligen ersten Gleichrichter (112-1 bis 112-n) geschaltet ist, der in Reihe mit einem Kondensator (114-1 bis 114-n) angeordnet und so geschaltet ist, daß er leitend ist, wenn die elektrischen Leistungswechselrichter (70) gesperrt sind, wobei die Kondensatoren (114-1 bis 114-n) in Reihe geschaltet sind und die Vielzahl von Hochspannungsklemmen hoher Leistung für Gleichstrom (120-1 bis 120-n + 1) bilden,
   **dadurch gekennzeichnet,**
   daß außerdem jeder Hauptprimärwicklung (50-11) eine Vielzahl von Zusatzprimärwicklungen (50-1p-1 bis 50-1p) zugeordnet ist, die parallel bezüglich der Hauptprimärwicklung geschaltet, auf den Magnetkreis (60) gewickelt und in Reihe mit einer entsprechenden Vielzahl von Zusatzleistungswechselrichtern (70-1p-1 bis 70-1p) geschaltet sind, deren jeweilige Steuergates (71-1p-1 bis 71-1p) an den Steuereingang angeschlossen sind.

2. Einrichtung nach Anspruch 1,
   dadurch gekennzeichnet,
   daß jede Sekundärwicklung (110-1 bis 110-n) außerdem jeweils einen zweiten Gleichrichter (130-1 bis 130-n) aufweist, der mit einer seiner Elektroden an den ersten entsprechenden Gleichrichter (112) angeschlossen ist und der mit der anderen seiner Elektroden an den entgegengesetzten Pol des Kondensators (114) angeschlossen ist, welcher der benachbarten Sekundärwicklung (110) zugeordnet ist.

3. Einrichtung nach Anspruch 2,
   dadurch gekennzeichnet,
   daß die elektrischen Wechselrichter (70) in Phase gesteuert sind.

4. Vorrichtung nach einem der Ansprüche 1 - 3,
   dadurch gekennzeichnet,
   daß die elektronischen Leistungswechselrichter (70) Feldeffekttransistoren vom VMOS-Typ sind.

FIG.1

FIG.2A

FIG.2B

FIG.3